# EUROPEAN PATENT APPLICATION

(11) **EP 1 154 627 A2**
(43) Date of publication of application: **14.11.2001**
(21) Application number: 01110505.3
(22) Date of filing: 27.04.2001
(51) Int. Cl.: H04M 3/51

(54) **Platform for customer-service management**

(30) Priority: 09.05.2000 IT MI001014
(71) Applicant: TXT e-solutions S.P.A., 20128 Milano (IT)
(72) Inventor: Braga, Illa Alvise, 20123 Milano (IT); Guida, Marco Edoardo, 20129 Milano (IT); Pirovano, Tullio Beniamino, 20059 Vimercate ( Milano) (IT)
(74) Representative: Petruzziello, Aldo

(57) **Abstract**

A platform for managing the customer service, for forwarding a service request (12) coming from a user (11) to a person or group of people (23) of an organization that is able to fulfill the service request (12), the platform (10) comprising:
- a customer service repository (CSR) made up of a set of sub-repositories (PR, SR, CR, TAR, WR), each connected to a sub-model (2, 3, 4, 5, 6) of a process model (1);
- a configurator (CSRC) of the customer service repository (CSR) designed to adapt the sub-models (2, 3, 4, 5, 6) of the process model (1) to the specific characteristics of the organization so as to fill with data the sub-repositories (PR, SR, CR, TAR, WR); and
- a set of modules (WM, TAM, CPM) designed to manage the data of the sub-repositories and to serve as interface between the user (11) making the service request (12) and the personnel (23) of the organization that satisfies the said request.

## Description

The present invention relates to a process for managing customer services based upon a software platform that is able to support operation of said process according to criteria of economic profitability.

In particular, the present invention is aimed at firms or bodies (hereinafter referred to generically as "organizations") that provide services, such as support or assistance to customers, on-line and remote consulting, on-line and remote training, and the like.

The aforesaid software platform is particularly suited to being applied to the call centers of such organizations.

On account of the ever-increasing competition, firms in all sectors (production, finance, services) are currently undergoing a phase of review of strategies and redefinition of organization and information systems according to schemes that increasingly focus on the customer. This philosophy places the customer at the center of all business processes and means that Customer Relationship Management (CRM) represents a company area that attracts increasingly higher investments.

Current approaches to CRM are based mainly on the activity of the Call Centers. In the most advanced cases, the Call Centers are integrated with other processes regarding services directed at the outside world (e.g., marketing, automation of the sales department, etc.) and in-company services (e.g., order management, logistics, etc.) both aimed at satisfying customer needs. The Call Centers can also be integrated, from both standpoints, with pre-existing systems - in particular, with Enterprise Resource Planning (ERP) and Supply Chain Management (SCM) systems.

Generally, the Call Centers are managed by groups, even ones of large size, of dedicated people, who have been specifically recruited for this task and trained to receive telephone calls and provide customers with on-line before-sales and after-sales information of both a commercial nature and a technical nature. Call Center systems provide the infrastructure necessary for receiving and distributing incoming phone calls to the Call Center staff, as well as for recovering relevant information from existing systems and recording certain key information regarding the customers who have called.

This approach to customer service presents several drawbacks and limitations.

People recruited for managing the Call Center generally receive a somewhat superficial training in a restricted number of areas. For this reason, their capacity for meeting customer expectations regarding the service proves rather limited.

The activity of the Call Center staff is generally boring, stressful, and consequently far from motivating. As a result, turnover of Call Center staff is normally very high, and a big investment in staff training is not economically advantageous.

Call Centers may even represent a practicable solution in the case of the consumer market and of standardized and very simple products, but are generally not profitable in the case where the customers are firms and the products are complex and personalized.

The overall expenditure for setting up a Call Center (infrastructures, labor costs, operating expenses, etc.) is generally very high, even in the case of total outsourcing of the service. The solution may not therefore be suitable for small and medium-sized enterprises.

Similar observations may be made also as regards the sector of consultancy. At present, consultancy activity takes place basically in the framework of meetings. Remote or on-line consultancy (whether by telephone, or via Internet and other new means of communication, or again through a combination of the two solutions) is not currently used nor is it possible on account of the lack of adequate technological infrastructures capable of supplying customers effectively with services that have an added value and are efficient from an economic point of view.

Finally, similar considerations may also apply to the training sector and, in particular, to remote training, for which it is of vital importance, both for public organizations and for private ones, to organize training and courses in such a way as to integrate the classes and the software provided for teaching purposes, both off-line and on-line, with a support to students and trainees that is readily accessible and economically valid.

Methods and technologies necessary for creating, managing and holding on-line courses and training cycles and for making back-up material accessible (e.g., on-line multimedia training, virtual classes, etc.) are now available. Existing products and technologies, however, do not yet enable the supply of back-up services to the trainees at the end of the institutional training sessions.

In the remote teaching and training area, the *customers* of the organizations who require back-up services are students and trainees.

The purpose of the present invention is to provide a software platform that is able to implement a method capable of managing the customer service which focuses on customer needs and sets at the disposal of the customer the best resources that the firm has available.

The above purpose is achieved in accordance with the invention thanks to the characteristics listed in the attached independent Claim 1.

Advantageous embodiments of the invention appear from the dependent claims.

In accordance with the present invention, a *process model* for providing a service to customers and a *software platform* that is able to support operation of such a process model are made available.

The process model is made up of *sub-models* considered as generic structures.

The software platform that implements the process model comprises a *customer service repository* made up of sub-repositories. Each sub-repository is associated to a sub-model which defines the contents of the corresponding sub-repository.

The *customer service repository* is configured by a *customer service repository configurator* which makes it possible to configure the software platform for a given firm or organization by adapting the process model to the specific characteristics of the organization.

The software platform moreover envisages *modules* which work together and, on the basis of the data arriving from the customer service repository, manage interaction between the customers and the personnel of the organization in charge of the customer service.

The advantages of the invention are evident.

The process of management of the customer service and its operation supported by the software platform enable customer-oriented organizations to distribute, amongst their own key staff, the tasks of customer service that are generally supplied by traditional Call Centers, as well as organizing and managing provision of customer services at a global level.

In particular, the present invention enables organizations to make available to their customers the best skills and resources that they have at their disposal. This approach may be applied also in the case of firms which deal in complex and personalized products. Consequently, the quality of the services provided by the firm will be considerably improved.

Further characteristics of the invention will be made clearer by the detailed description that follows, which refers to a purely exemplary and therefore non-limiting embodiment thereof, and illustrated in the appended drawings, in which:
Fig. 1 is a block diagram providing a generic illustration of a process model according to the invention;
Fig. 2 is a block diagram illustrating the architecture of a software platform according to the invention;
Fig. 3 is a block diagram illustrating operation of the workflow module of the platform according to the invention;
Fig. 4 is a block diagram illustrating operation of the task-allocation module of the platform according to the invention; and
Fig. 5 is a block diagram illustrating operation of the customer-profiling module of the software platform according to the invention.

According to a preferred embodiment of the invention, a process model is defined which is a generic and abstract reference scheme.

The process model is made up of sub-models. Each sub-model is a generic structure, which may be described using a formal language.

Preferably, the sub-models are described, in a formal way, using eXtensible Mark-up Language (XML), which is per se known.

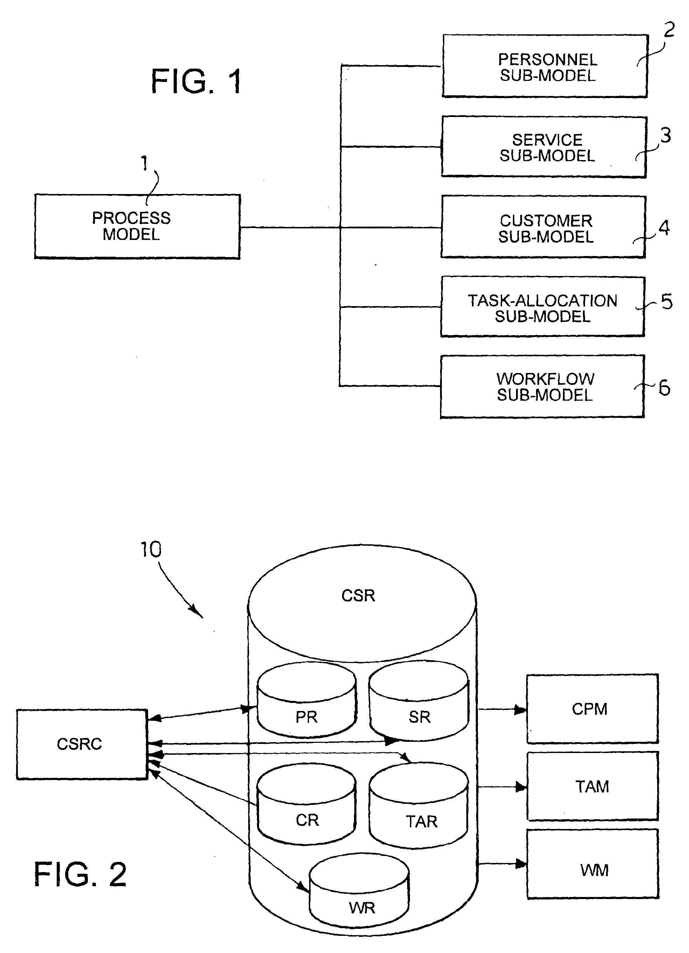

As shown in Fig. 1, the process model, which is designated as a whole by the reference number 1, is divided into five sub-models:
- a *personnel sub-model* 2 defining the skills and expertise of individuals working within an organization who are involved in the provision of customer services, as well as defining any constraints (e.g., time availability) that may exist on the involvement of an individual in the service-provision process;
- a *service sub-model* 3 defining the type of service to be supplied to the customer by a given organization, and specifying the corresponding general requirements and the skills and expertise necessary for supplying effectively each of the services identified;
- a *customer sub-model* 4 defining the basic characteristics of the customers or groups of customers and the requirements linked to supply of services, possibly defined by the individual customers or groups of customers;
- a *task-allocation sub-model* 5 defining the criteria of allocation and programming of tasks and the criteria of dynamic re-allocation and reprogramming of said tasks, to be adopted in a given organization; these criteria are based upon the requirements of the service requested, upon the skills of the available personnel, upon the existing constraints regarding available resources, and upon the customer-related requirements; and
- a *workflow sub-model* 6 defining the main workflow, as well as the elementary tasks involved in service provision to customers defined in the *service sub-model 3.*

The above-mentioned sub-models constitute the reference points for determining a computer database which makes up the core structure of a software platform.

According to the above division of the process model 1 into sub-models, a software platform is provided, as illustrated in Figure 2 and designated as a whole by the reference number 10.

The software platform 10 comprises a main database, which is referred to hereinafter as *Customer Service Repository* (CSR), for storage of the various sub-models making up the process model 1. The said sub-models are stored in *sub-repositories.* Each sub-repository is associated to a respective sub-model of the process model 1.

In the present embodiment, five sub-repositories are present: a *Personnel sub-Repository* (PR), a *Service sub-Repository* (SR), a *Customer sub-Repository* (CR), a *Task-Allocation sub-Repository* (TAR), and a *Workflow sub-Repository* (WR).

The platform 10 is provided with a *Customer Service Repository Configurator* (CSRC) which interacts with the customer service repository CSR. The customer service repository configurator CSRC enables the platform to be configured for a given organization by adapting the process model and the sub-repositories of the customer service repository CSR to the characteristics of the specific organization.

According to the specific characteristics of the organization, the customer service repository configurator CSRC makes it possible to configure the personnel sub-model 2, service sub-model 3, customer sub-model 4, task-allocation sub-model 5, and workflow sub-model 6 by respectively filling the sub-repository PR, the sub-repository SR, the sub-repository CR, the sub-repository TAR, and the sub-repository WR.

The platform 10 further comprises three modules which, according to the data coming from the customer service repository CSR, perform key functions of management of the interaction between a customer requesting a service and the personnel of the organization in charge of customer service. The aforesaid modules are:
- a *Workflow Module* (WM) which coordinates and synchronizes all the actors (service personnel of the organization and customers), as well as the tasks involved in supply of services, and keeps track of interactions between the organization and the customer, recording them in a special log;
- a *Task-Allocation Module* (TAM) which distributes the tasks involved in customer-service provision amongst the organization personnel and plans the supply of services in time; and
- a *Customer-Profiling Module* (CPM) which supports analysis of the log kept by the workflow module WM, so as to create customer profiles, clustering the customers together into homogeneous groups.

There now follows a description of the operation of the aforesaid modules.

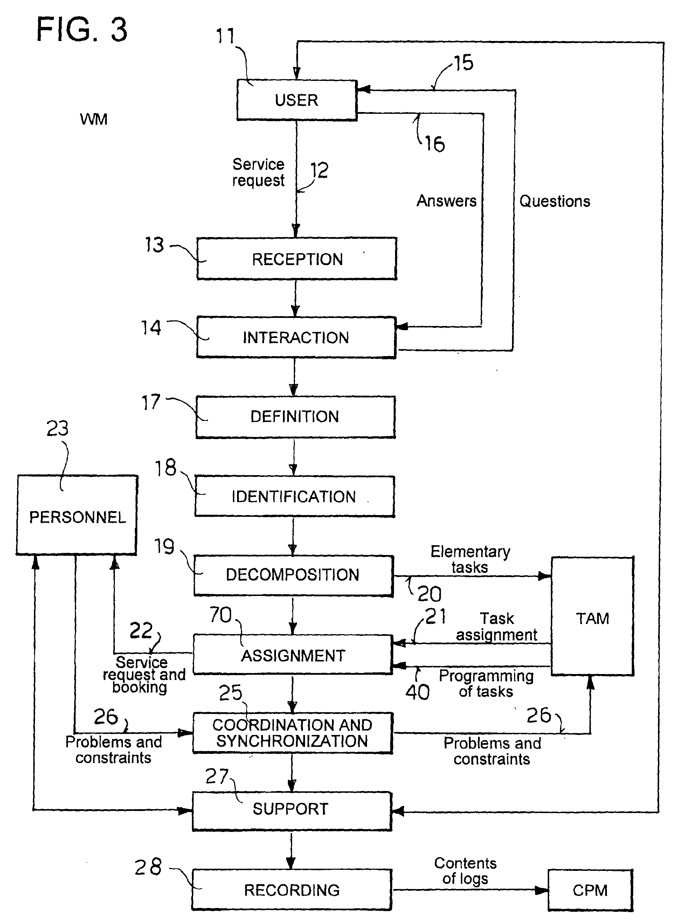

With reference to Fig. 3, operation of the workflow module WM is described in accordance with the key functions afforded by the said module.

A user 11 sends a service request 12, by telephone or telematic means, to the organization that possesses the platform according to the invention. The service request 12 is forwarded to the workflow module WM.

The workflow module WM is made up of various blocks, which carry out specific key functions.

The incoming service request 12 presented by the user 11 arrives at a reception block 13, which forwards it to an interaction block 14, where an interactive question-and-answer session, made up of questions 15 and answers 16, is automatically set up with the user 11 to define the characteristics of the service requested. If the request 12 arrives by telephone, an automated interaction of a voice type is used.

The data gathered by the interaction block 14 are sent to a definition block 17, which defines the nature of the service requested and recognizes any other important requirement and/or constraint.

Once the service requested has been defined, the definition block 17 passes the data to an identification block 18, where all the requirements necessary for a personalization of the service requested are identified for booking a given time slot for execution of the service, and/or for booking a specific person chosen from the organization staff.

The data identified in the identification block 18 are sent on to a decomposition block 19, where the service request 12 is broken down into elementary service tasks 20.

The elementary tasks 20 are sent to the task-allocation module TAM. The task-allocation module TAM verifies whether the service request 12 can be met automatically. In the case where human intervention is necessary, the task-allocation module TAM identifies the person to whom the service request 12 could be forwarded. The task-allocation module TAM moreover verifies whether it is possible to book an adequate time slot and/or a specific person for carrying out the elementary tasks that it has received.

Once the task-allocation module TAM has identified the times for fulfilling the service request, as well as the person who is able to render the service, the data for assignment of the tasks 21 and for programming the activities 40 are sent to an assignment block 70 of the workflow module (WM).

According to the data 21 and 40 received from the task-allocation module TAM, the assignment module 70 forwards a request for, and/or a booking of, the service 22 to the person or persons selected from the organization staff 23 (transferring the call if the request has arrived by telephone; otherwise, notifying the person or persons concerned via telematic means).

A coordination and synchronization block 25 is provided for coordinating and synchronizing execution of the tasks and elementary activities for service provision among the staff 23 involved within the organization.

The coordination and synchronization block 25 receives from the staff 23 information 26 regarding the problems and constraints of the staff in rendering the service to the customer, and transfers this information to the task-allocation module TAM. In this way, the task-allocation module TAM has all the relevant information for possibly reassigning and reprogramming the tasks.

A support block 27 is provided which carries out coordination, synchronization and support for the global interaction between the organization staff 23 and the user 11, either in real time (in the case of a phone call) or deferred (in the case of requests sent by telematic means or whenever a follow-up is necessary subsequent to the phone call).

The data coming from the support block 27 are sent to a recording block 28, which records the state of execution of the elementary tasks 20 in the framework of the service as regards all the persons involved, as well as the state of the global provision of the service.

The support block 27 draws up a complete log on the results of the elementary service tasks 20, as well as a log of the basic data exchanged between the organization personnel 23 and the customers 11 in the course of provision of the service. The contents of the said logs are sent to the customer-profiling module CPM.

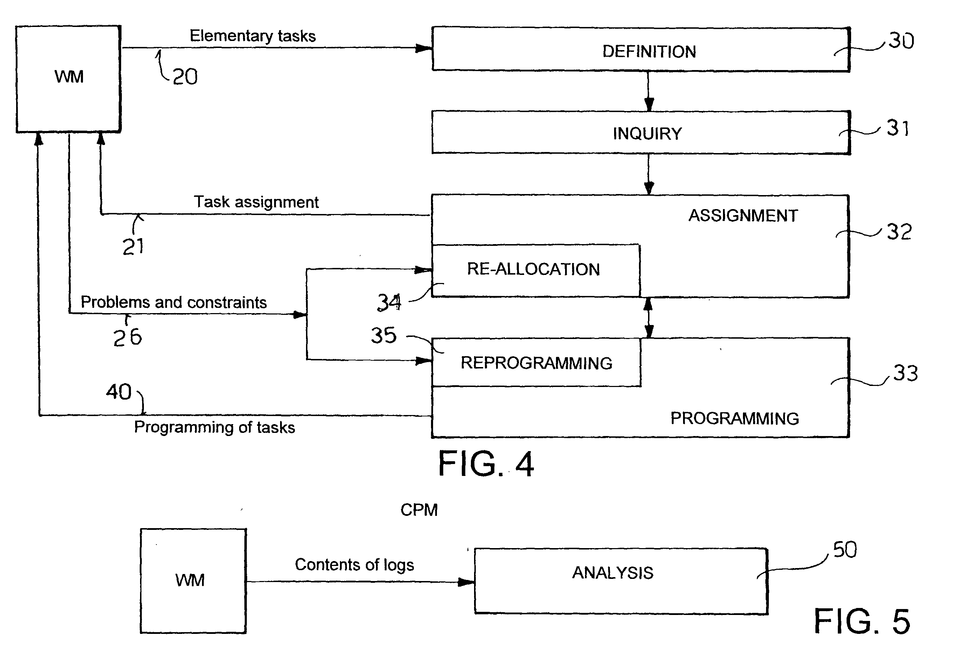

With reference to Fig. 4, operation of the task-allocation module TAM is described according to the key functions it affords.

The task-allocation module TAM is provided with a definition block 30, which receives at input the elementary tasks 20 sent by the decomposition block 19 of the workflow module WM. The definition block 20 defines a scheme of the requirements of the service requested 12 and of the user 11 who is the recipient of the service, comparing them with the skills and expertise existing among the organization personnel 23 and with the availability of said personnel 23.

An inquiry block 31 is provided for verifying whether a service request 12 and/or an elementary service task 20 can be automatically satisfied/executed, or else whether intervention on the part of a member of the organization staff 23 is required.

The data arriving from the inquiry block 31 are sent to an assignment block 32, which identifies a specific person within the organization staff 23 to whom the service request 12 and/or the elementary service tasks 21 are to be assigned. Assignment of the elementary tasks 21, generated by the assignment block 32, is sent to the workflow module WM, which will assign the said tasks to the person selected.

A programming block 33 is provided, which interacts with the assignment block 32. The programming block 33 carries out task programming 40, which is sent to the workflow module WM; i.e., the programming block 33 programs the time slots required for provision of the service and/or execution of the elementary service tasks.

Included in the assignment block 32 is a re-allocation sub-block 34, which receives at input from the workflow module WM the problems and constraints 26 of the personnel and, according to the data received, carries out dynamic re-allocation of the staff resources available, destining them to tasks and activities.

Included in the programming block 33 is a re-programming sub-block 35, which receives at input from the workflow module WM the problems and constraints 26 of the staff and, according to the data received, carries out dynamic reprogramming of the tasks and activities.

As illustrated in Fig. 5, the customer-profiling module CPM offers a key function performed by an analysis block 50, which carries out analysis of the contents of the log held by the workflow module WM, so as to enable automatic creation of customer profiles, clustering the customers together to form homogeneous groups.

Numerous variations and modifications of details within the reach of a person skilled in the art and falling within the scope of the invention can be made to the present embodiment of the invention set forth in the appended claims.

## Claims

1. A platform for customer-service management, in particular for forwarding a service request (12) coming from a user (11) to a person or group of people (23) of an organization that is able to fulfill said service request (12), the platform (10) comprising:
- a customer service repository (CSR) made up of a set of sub-repositories (PR, SR, CR, TAR, WR), each sub-repository being connected to a sub-model (2, 3, 4, 5, 6) of a process model (1);
- a configurator (CSRC) of the customer service repository (CSR) designed to adapt the sub-models (2, 3, 4, 5, 6) of the process model (1) to the specific characteristics of the organization in such a way as to fill said sub-repositories (PR, SR, CR, TAR, WR) with data; and
- a set of modules (WM, TAM, CPM) designed to manage the data of said sub-repositories to function as an interface between the user (11) who makes the service request (12) and the personnel (23) of the organization that fulfills said request.

2. The platform according to Claim 1, **characterized in that** each sub-model is a generic structure based upon eXtensible Mark-up Language (XML).

3. The platform according to Claim 1 or Claim 2, **characterized in that** said sub-models comprise:
- a *personnel sub-model* (2) defining the skills and expertise of the personnel (23) of the organization who will be involved in the provision of customer services, as well as defining any constraints that may exist on the involvement of an individual in the service-provision process;
- a *service sub-model* (3) defining the type of service to be supplied to the customer (11) by the personnel (23) of the organization and comprising the corresponding general requirements and the skills and expertise necessary for supplying effectively each of the services identified;
- a *customer sub-model* (4) defining the basic characteristics of the customers or groups of customers and the requirements linked to supply of services, possibly defined by the individual customers or groups of customers;
- a *task-allocation sub-model* (5) defining the criteria of allocation and programming of tasks and the criteria of dynamic re-allocation and reprogramming of tasks; and
- a *workflow sub-model* (6) defining the main workflow, as well as the elementary tasks involved in service provision to customers defined in the *service sub-model* (3).

4. The platform according to any one of the foregoing claims, **characterized in that** said modules comprise:
- a *workflow module* (WM) which coordinates and synchronizes the interactions between the user (11) who has requested the service and the personnel (23) of the organization, and keeps track of said interactions by recording them in a log;
- a *task-allocation module* (TAM) which, on the basis of the data received from the workflow module (WM), allocates to the organization personnel the tasks involved in customer-service provision and plans service provision in time; and
- a *customer-profiling module* (CPM) which supports analysis of the log kept by the workflow module (WM), so as to create customer profiles, clustering the customers together into homogeneous groups.

5. The platform according to Claim 4, **characterized in that** said workflow module (WM) performs the following key functions:
- receipt (13) of a service request (12) from a user (11);
- interaction (14) with the user (11) by means of questions and answers (15, 16) in automatic mode;
- definition (17) of the nature of the service requested;
- identification (18) of all the requirements for personalization of the service requested;
- breaking-down (19) of the service into elementary tasks (20), which are passed on to said task-allocation module (TAM), which identifies the person or group of people (23) to whom the service requested is to be addressed, as well as the time necessary for rendering the service;
- assignment (70) of the service request to the person or group of people (23) identified by the task-allocation module (TAM);
- coordination and synchronization (25) of assignment of the tasks according to the problems and constraints of the personnel (23) responsible for providing customer service;
- coordination, synchronization and support (27) to the interaction between the user (11) and the person (23) selected for fulfilling the service request; and
- recording (28) in a log of the basic data exchanged between the user (11) and the organization personnel (23).

6. The platform according to Claim 4 or Claim 5, **characterized in that** said task-allocation module (TAM) performs the following key functions:
- definition (30) of a scheme of the requirements of the service requested (12) and of the destinee customer (11), comparing them with the skills, expertise and availability of the personnel (23) of the organization;
- inquiry (31) to determine whether the service request for an elementary service task can be fulfilled automatically or else by intervention on the part of one member of the personnel (23);
- assignment (32) of the service request and/or of the elementary service tasks to a specific person within the destinee organization, for the purposes of provision/execution; and
- programming (33) of the time slots necessary for supplying the service and/or executing the elementary service tasks.

7. The platform according to Claim 6, **characterized in that** said key functions of assignment (32) and programming (33) comprise respective key functions of dynamic re-allocation (34) and dynamic reprogramming (35), which, according to the problems and constraints of the organization personnel, re-allocate and reprogram the tasks of the personnel (23) of the organization.

8. The platform according to any one of Claims 4 to 7, **characterized in that** said customer-profiling module (CPM) envisages the key function of analysis (50) of the contents of the log kept by the workflow module (WM) so as to create automatically the customer profiles, clustering the customers together into homogeneous groups.

9. A process model (1) for managing a customer-service procedure by the personnel of an organization, the process model comprising the following sub-models:
- a *personnel sub-model* (2) defining the skills and expertise of the personnel (23) of the organization who will be involved in the provision of customer services, as well as defining any constraints that may exist on the involvement of an individual in the service-provision process;
- a *service sub-model* (3) defining the type of service to be supplied to the customer (11) by the personnel (23) of the organization and comprising the corresponding general requirements and the skills and expertise necessary for supplying effectively each of the services identified;
- a *customer sub-model* (4) defining the basic characteristics of the customers or groups of customers and the requirements linked to supply of services, possibly defined by the individual customers or groups of customers;
- a *task-allocation sub-model (5)* defining the criteria of allocation and programming of tasks and the criteria of dynamic re-allocation and reprogramming of tasks; and
- a *workflow sub-model (6)* defining the main workflow, as well as the elementary tasks involved in service provision to customers defined in the *service sub-model (3).*
